# EUROPEAN PATENT APPLICATION

(11) **EP 3 210 792 A1**
(43) Date of publication of application: **30.08.2017**
(21) Application number: 17153076.9
(22) Date of filing: 25.01.2017
(51) Int. Cl.: B41J 11/00, B41J 15/04

(54) **PRINTER, RECORDING MEDIUM, SALES DATA PROCESSING APPARATUS**

(30) Priority: 29.01.2016 JP 2016015114
(71) Applicant: Toshiba TEC Kabushiki Kaisha, Tokyo 141-0032 (JP)
(72) Inventor: YASUI, Yuji, Shinagawa-ku, Tokyo 141-8562 (JP)
(74) Representative: Takeuchi, Maya

(57) **Abstract**

According to the embodiment, a printer (24) includes a feeding device (52, 53), a mark detector device (40), and a controller device. The feeding device (52, 53) feeds an elongated recording medium (R). A bar-shape mark having a predetermined length is successively formed from a rear end of the recording medium (R). The mark detector device (40) detects presence/absence of the mark on a feeding path (52) of the feeding device (52, 53). The controller device recognizes that the recording medium (R) is in a near- end status based on a mark detection result of the mark detector device (40).

## Description

### FIELD

The present invention relates to the field of printing systems in general and, in particular, to a printer system and a recording medium, as well as a sales data processing apparatus and the corresponding system.

### BACKGROUND

Typically, a printer built in or connected to a POS (Point of Sales) or the like is known.

Such a printer prints product information of products sold at a store and payment information on elongated receipt paper while feeding the elongated receipt paper.

The printer is capable of detecting near-end marks printed near the rear end of the receipt paper, and thereby recognizing that the receipt paper is shortened, i.e., the printer is running out of the receipt paper.

The near-end marks are printed on a plurality of positions of the receipt paper at predetermined intervals in the feed direction of the receipt paper. Typically, a printer detects the near-end marks printed on a plurality of positions.

Meanwhile, for example, when a cover of a printer is opened after near-end marks are detected, the receipt paper may sometimes be displaced in the feed direction.

As a result, a typical printer may not detect near-end marks again when the cover is closed after that.

In other words, a typical printer may not detect near-end marks of receipt paper, which were once detected, again after a cover is opened/closed.

To solve the above problems, there is provided a printer system, comprising:
a print device that prints information on an elongated recording medium;
a feeding path that feeds the recording medium to the print device;
a detector device for the feeding path that detects a mark on the recording medium, the mark being successively formed from a rear end of the recording medium in a feed direction of the feeding path, the mark having a predetermined length in a longitudinal direction of the recording medium; and
a controller device that recognizes that the recording medium is shortened in the longitudinal direction when the detector device detects the mark.

Preferably, the predetermined length is larger than a displacement length, the recording medium being likely to be displaced in the feed direction.

Preferably still, the mark has a bar-shape in the longitudinal direction of the recording medium.

Preferably yet, the mark formed on the recording medium has a plurality of marks.

Suitably, when the detector device detects the mark, the controller device recognizes that the length of the recording medium in the longitudinal direction is equal to or smaller than the predetermined length.

Suitably still, when the detector device detects the mark, the controller device keeps on recognizing that the recording medium is shortened in the longitudinal direction until the detector device detects absence of the recording medium.

Suitably yet, the detector device further detects presence/absence of the recording medium.

The invention also relates to an elongated recording medium to be supplied to a printer system including a print device that prints information on the elongated recording medium, a feeding path that feeds the recording medium to the print device, and a detector device that detects that the recording medium is shortened in a longitudinal direction, the elongated recording medium comprising:
a front end in a feed direction of the feeding path;
a rear end in the feed direction of the feeding path; and
a mark successively formed from the rear end in the feed direction toward the front end in the feed direction, the mark having a predetermined length in the longitudinal direction of the recording medium, the mark being to be detected by the detector device.

Preferably, the predetermined length is larger than a displacement length, the recording medium being likely to be displaced in the feed direction.

Preferably still, the mark has a bar-shape in the longitudinal direction of the recording medium.

Preferably yet, the mark formed on the recording medium has a plurality of marks.

The invention further relates to a sales data processing apparatus, comprising:
an input device that inputs identification information identifying a product-for-sale;
a printer that
   prints print information on an elongated recording medium, the print information including information on the product-for-sale, the product-for-sale corresponding to the identification information input by the input device, and issues a receipt;
an alert device that alerts that the recording medium of the printer is shortened; and
a first controller device that
   stores the information on the product-for-sale corresponding to the identification information input by the input device to execute sales register processing for the product-for-sale,
   outputs the stored information on the product-for-sale to the printer to issue the receipt, and
   controls the alert device to execute the alert operation when the printer inputs information indicating that the recording medium is shortened,
the printer including
   a print device that prints the print information on the elongated recording medium,
   a feeding path that feeds the elongated recording medium to the print device,
   a detector device for the feeding path that detects a mark on the recording medium, the mark being successively formed from a rear end of the recording medium in a feed direction of the feeding path, the mark having a predetermined length in a longitudinal direction of the recording medium, and
   a second controller device that outputs, when the detector device detects the mark, the information indicating that the elongated recording medium is shortened in the longitudinal direction to the first control device for the alert operation by the alert device.

Conveniently, the predetermined length is larger than a displacement length, the recording medium being likely to be displaced in the feed direction.

In the above sales data processing apparatus, the mark preferably has a bar-shape in the longitudinal direction of the recording medium.

Also in the above sales data processing apparatus, the mark formed on the recording medium has a plurality of marks.

Suitably, when the detector device detects the mark, the second controller device recognizes that the length of the recording medium in the longitudinal direction is equal to or smaller than the predetermined length.

The invention further concerns a sales data processing system, comprising:
an input device that inputs identification information identifying a product-for-sale;
a printer that
   prints print information on an elongated recording medium, the print information including information on the product-for-sale, the product-for-sale corresponding to the identification information input by the input device, and issues a receipt;
an alert device that alerts that the recording medium of the printer is shortened; and
a first controller device that
   stores the information on the product-for-sale corresponding to the identification information input by the input device to execute sales register processing for the product-for-sale,
   outputs the stored information on the product-for-sale to the printer to issue the receipt, and
   controls the alert device to execute the alert operation when the printer inputs information indicating that the recording medium is shortened,
the printer including
   a print device that prints the print information on the elongated recording medium,
   a feeding path that feeds the elongated recording medium to the print device,
   a detector device for the feeding path that detects a mark on the recording medium, the mark being successively formed from a rear end of the recording medium in a feed direction of the feeding path, the mark having a predetermined length in a longitudinal direction of the recording medium, and
   a second controller device that outputs, when the detector device detects the mark, the information indicating that the elongated recording medium is shortened in the longitudinal direction to the first control device for the alert operation by the alert device.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram showing a system of an embodiment.
Fig. 2 is an external perspective view showing the self POS terminal of the embodiment.
Fig. 3 is a perspective view showing the printer of the embodiment, where the cover is open.
Fig. 4 is a diagram showing the back side of the receipt paper of the embodiment.
Fig. 5 is a block diagram showing the hardware configuration of the self POS terminal of the embodiment.
Fig. 6 is a block diagram showing the hardware configuration of the embodiment.
Fig. 7 is a functional block diagram showing the functional configuration of the printer of the embodiment.
Fig. 8 is a flowchart showing the control processing of the printer of the embodiment.
Fig. 9 is a functional block diagram showing the functional configuration of the self POS terminal of the embodiment.
Fig. 10 is a flowchart showing the control processing of the self POS terminal of the embodiment.
Fig. 11 is a diagram showing the back side of other receipt paper of the embodiment.

### DETAILED DESCRIPTION

According to an embodiment, a printer system includes a print device, a feeding path, a detector device, and a controller device.

The print device prints information on an elongated recording medium.

The feeding path feeds the recording medium to the print device.

The detector device is provided for the feeding path.

The detector device detects a mark on the recording medium.

The mark is successively formed from a rear end of the recording medium in a feed direction of the feeding path, the mark having a predetermined length in a longitudinal direction of the recording medium.

The controller device recognizes that the recording medium is shortened in the longitudinal direction when the detector device detects the mark.

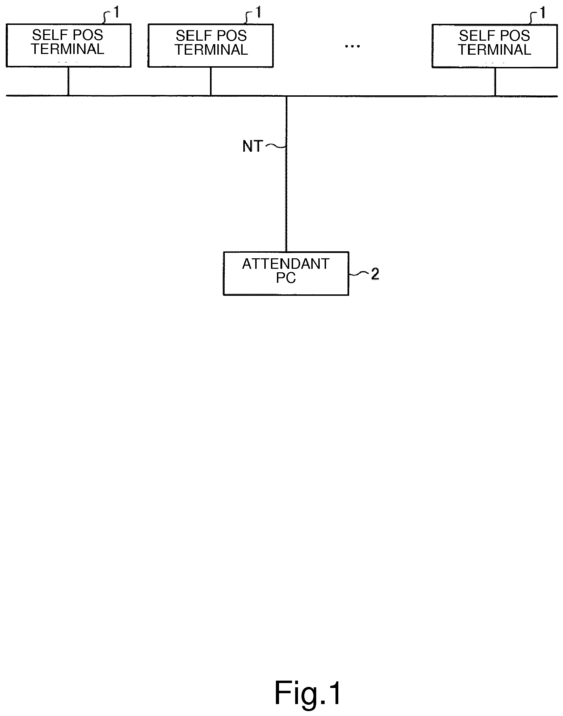

Hereinafter, with reference to Fig. 1 to Fig. 11, a printer, a recording medium, and a sales data processing apparatus of the embodiment will be described in detail.

Note that, in the drawings, the same reference symbols show the same or similar units.

In the embodiment, a self POS (Point of Sales) terminal will be described as a sales data processing apparatus. A customer operates a self POS terminal by himself for sales register processing and payment processing.

Further, in the embodiment, a printer will be described as an apparatus built in the self POS terminal. Further, in the embodiment, a product (commercial product) will be described as an example of a product-for-sale. Note that the following description will no limit the embodiment.

Fig. 1 is a schematic diagram showing a system including a self POS terminal (sales data processing apparatus) of the embodiment.

As shown in Fig. 1, the system includes the self POS terminals 1 and the attendant PC (Personal Computer) 2.

The self POS terminals 1 are electrically connected to the attendant PC 2 via the communication network NT such as a LAN (Local Area Network) network, for example.

The self POS terminal 1 includes a register unit. The register unit reads an identification information that identifies a product, for example, a product code, from the product (product-for-sale) that a customer will buy, and is thus operated for sales register processing.

The identification information includes a product code attached on the product, for example.

The self POS terminal 1 includes a payment unit. The payment unit is operated for payment processing based on product information corresponding to the read product code.

Hereinafter, operation for sales register processing will be simply referred to as sales register operation. Further, operation for payment processing will be simply referred to as payment operation.

A customer by himself makes the sales register operation for the register unit and the payment operation for the payment unit.

The self POS terminal 1 executes the sales register processing based on the sales register operation made by the customer. Further, the self POS terminal 1 executes the payment processing based on the payment operation made by the customer.

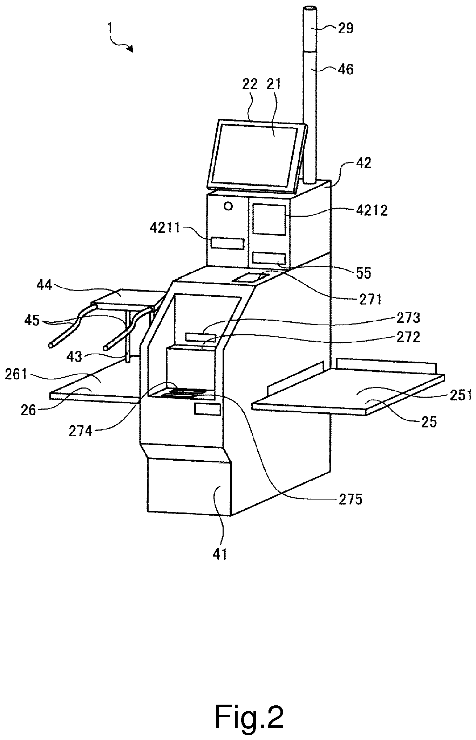

Note that the configuration of the self POS terminal 1 will be described in detail with reference to Fig. 2.

Here, the sales register processing includes displaying and storing product information of the product corresponding to an input product code. The product information includes the product name, the price, and the like.

Further, the payment processing includes displaying the total price and the change of the transaction with a customer based on the product information of which the sales register processing is executed.

A camera (not shown) is provided near each self POS terminal 1 and monitors a customer who makes the sales register operation and the payment operation. The attendant PC 2 displays an image of a customer who makes the sales register operation and the payment operation at each self POS terminal 1, the image being obtained by the camera.

An attendant, i.e., a store worker, watches the image displayed on the attendant PC 2, monitors the customer who makes the sales register operation and the payment operation, and checks if the customer has made the sales register operation and the payment operation improperly, for example.

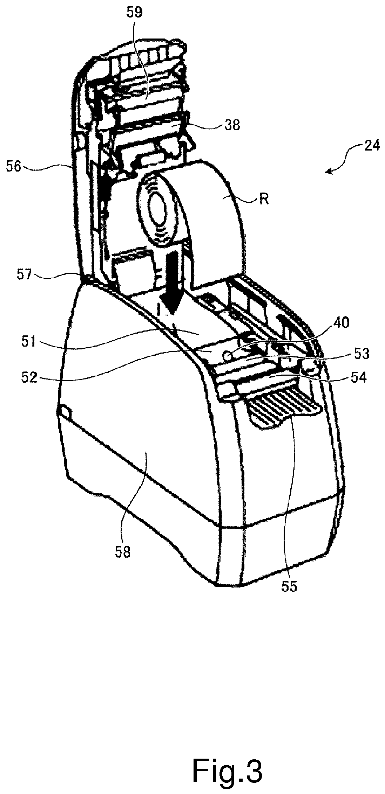

Further, the attendant PC 2 displays the status of the printer 24 (for example, see Fig. 3) built in the self POS terminal 1. For example, the attendant PC 2 displays the status where the receipt paper R is shortened, i.e., the status where the print position on the receipt paper R is coming close to the rear end of the receipt paper R and the printer 24 is running out of the receipt paper R.

In the following description, the status where the receipt paper R is shortened, i.e., the status where the printer 24 is running out of the receipt paper R, will sometimes be referred to as a near-end status.

For example, the attendant PC 2 displays the near-end status of the receipt paper, absence of the receipt paper R, the status where the cover is open, and the like.

An attendant watches the display of the attendant PC 2, and operates the corresponding self POS terminal 1 to refill the self POS terminal 1 with the receipt paper R, for example.

Fig. 2 is an external perspective view showing the self POS terminal 1 (sales data processing apparatus).

As shown in Fig. 2, the self POS terminal 1 includes the first housing 41 and the second housing 42.

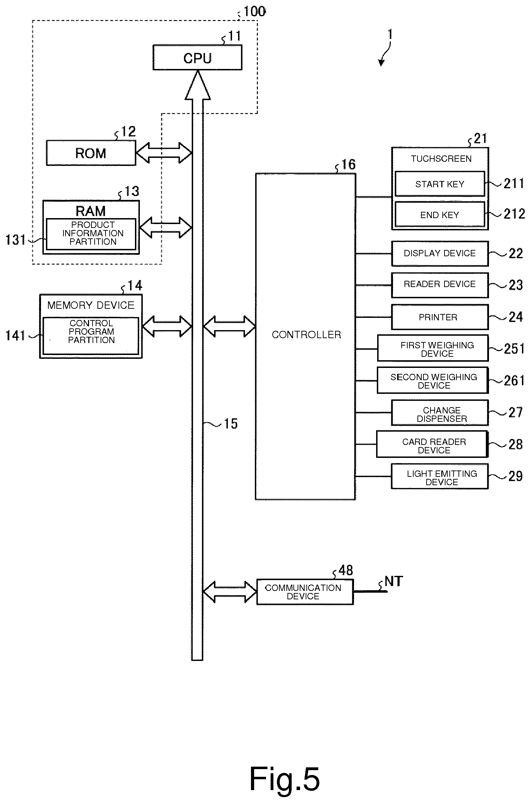

The first housing 41 accommodates the change dispenser 27 that dispenses coins/bills, the first controller device 100 (described later), and other devices therein (see Fig. 5).

The change dispenser 27 sorts coins and bills received from a customer, and stores the sorted coins and bills.

Further, the change dispenser 27 dispenses the change to the customer.

The first housing 41 includes the cash acceptor slot 271 that accepts coins, the cash dispenser slot 273 that dispenses change coins, and the tray 272 that receives the dispensed coins.

Further, the first housing 41 includes the cash acceptor slot 274 that accepts bills, and the cash dispenser slot 275 that dispenses change bills.

In other words, the change dispenser 27 accepts coins received from a customer via the cash acceptor slot 271.

The change dispenser 27 accepts bills received from a customer via the cash acceptor slot 274.

The change dispenser 27 dispenses change coins via the cash dispenser slot 273.

The change dispenser 27 dispenses change bills via the cash dispenser slot 275.

Further, the first housing 41 includes the table 25 and the table 26 at the right and left sides.

The table 25 includes the first weighing device 251.

The table 26 includes the second weighing device 261.

A customer puts a basket on the table 25. Products that he wants to buy are in the basket.

The first weighing device 251 measures the total weight of the basket on the table 25 and the products in the basket. A bag is set on the table 26. The products from the basket on the table 25 are put in the bag.

The second weighing device 261 measures the total weight of the bag set on the table 26 and the products in the bag.

Further, the table 26 includes the two support rods 43 extending upward from the top of the table 26, the lay-down table 44 at the top of the support rods 43, and the two extending rods 45.

A bag (not shown) is set on the extending rods 45. After the reader device 23 (see Fig. 5) reads a product code of a product, the product is put in the bag.

The extending rods 45 are hung with the handles of the bag and the bag is thus open. A customer may put products in the bag easily.

Further, after the reader device 23 (see Fig. 5) reads product codes of products, fragile products (tofu or eggs) are laid down on the lay-down table 44 for a while. The products laid down on the lay-down table 44 are put in the bag at last.

The second housing 42 is on the top of the first housing 41.

The second housing 42 stores the reader device 23, the printer 24, and the card reader device 28 (all of them are shown in Fig. 5).

The reader device 23 is an input device that inputs identification information that identifies a product (product-for-sale).

As described above, the identification information is a product code, for example. More specifically, the product code is a symbol such as a barcode or a matrix code attached on a product.

Further, the reader device 23, for example, optically reads the symbol and inputs identification information.

After the self POS terminal 1 executes the sales register processing for products, the printer 24 prints the product information of the products and the payment information on the receipt paper R and issues a receipt. The information is printed on the receipt paper R, and the receipt paper R is cut as a receipt.

The card reader device 28 reads customer identification information from an inserted credit card, for example. In the credit card payment, the self POS terminal 1 executes the payment processing based on the customer identification information read by the card reader device 28.

Further, the second housing 42 includes the reader window 4212 of the reader device 23, and the dispenser slot 55 that dispenses receipts that the printer 24 issues.

Further, the second housing 42 includes the insertion slot 4211. A card inserted in the insertion slot 4211 is supplied to the card reader device 28.

Further, the second housing 42 includes the display device 22 at the top.

The display device 22 displays product information of products when a customer makes the sales register operation.

Further, the display device 22 displays payment information when the customer makes the payment operation.

The display device 22 includes the touchscreen 21 at the front.

The touchscreen 21 functions as keys.

The customer touches positions on the touchscreen 21 corresponding to various keys displayed on the display device 22 to thereby operate the keys.

Further, the second housing 42 includes the columnar pole 46 extending upward at the rear.

The pole 46 includes the light emitting device 29 at the top end.

The light emitting device 29 is an alert device that emits light when a customer makes an operation to call an attendant.

Further, the light emitting device 29 emits light in the near-end status of the receipt paper of the printer 24 to alert the attendant.

The customer takes a product out of the basket on the table 25, and brings the product in front of the reader window 4212. The reader device 23 reads the code attached on the product.

Then the customer puts the product in the bag on the table 26.

The self POS terminal 1 determines if the change of the values (weight values) measured by the first weighing device 251 before and after taking products out of the basket on the table 25 is the same as the change of the values (weight values) measured by the second weighing device 261 before and after putting products in the bag on the table 26. The self POS terminal 1 determines if the customer has made an operation appropriately or not based on the result.

When the change of the values measured by the first weighing device 251 is the same as the change of the values measured by the second weighing device 261, the self POS terminal 1 executes the sales register processing.

Next, the printer 24 will be described.

Fig. 3 is a perspective view showing the printer 24, where the cover 56 opens the main body 58.

As shown in Fig. 3, the printer 24 includes the main body 58 and the cover 56.

The main body 58 includes the accommodating device 51 that accommodates the rolled elongated receipt paper R (recording medium).

Further, the main body 58 includes the feeding path 52.

Further, the main body 58 includes the platen 53 that faces the feeding path 52.

The feeding path 52 includes guides (not shown) at both the sides.

The feeding path 52, which includes the guides, guides the receipt paper R fed from the accommodating device 51 to the platen 53.

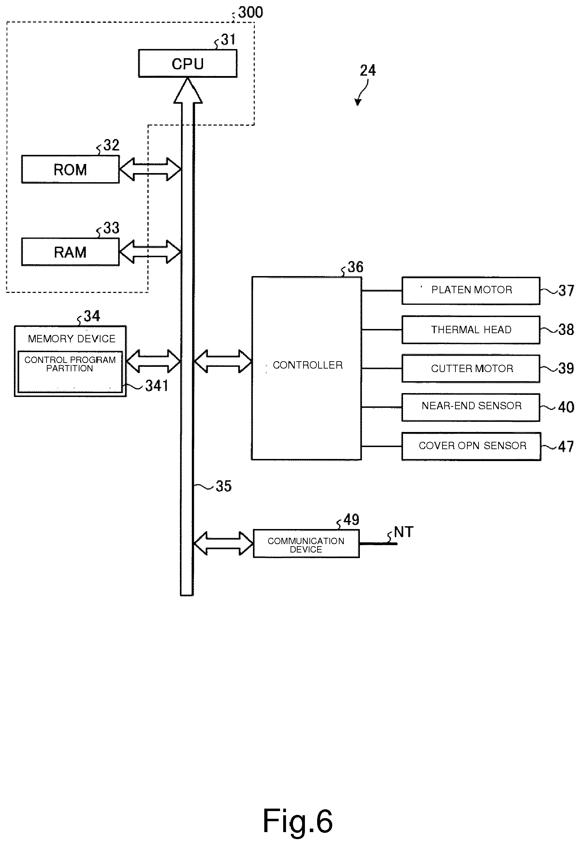

The platen motor 37 (see Fig. 6) rotates the platen 53, and the platen 53 feeds the receipt paper R. In other words, the feeding path 52 feeds the receipt paper R in cooperation with the platen 53.

Further, the main body 58 includes the cutter 54 at the downstream of the platen 53 in the feed direction of the receipt paper R. The cutter 54 cuts the receipt paper R in cooperation with the cutter 59 (described later).

Further, the main body 58 includes the dispenser slot 55 that dispenses the cut receipt paper R.

Here, the receipt paper R (recording medium) will be described.

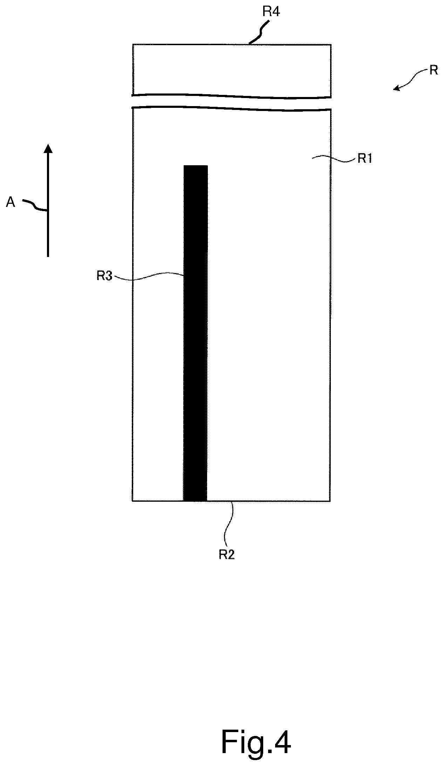

Fig. 4 is a diagram showing the back side of the receipt paper R.

The receipt paper R includes the front end R4 and the rear end R2.

The front end R4 is the roll-end edge of the rolled elongated receipt paper R.

The front end R4 is the front end of the receipt paper R in the feed direction (direction of arrow A of Fig. 3).

The rear end R2 is the roll-start edge of the rolled elongated receipt paper R.

The rear end R2 is the rear end of the receipt paper R in the feed direction.

Both the front side and the back side of the receipt paper R are white.

When the front side of the receipt paper R is heated, it becomes black. The information is printed in black on the front side of the receipt paper R.

The back side R1 has the black mark R3.

Specifically, the mark R3 is printed on the back side R1.

The mark R3 is successively printed from the rear end R2 toward the front end R4 of the receipt paper R. In other words, the mark R3 is successively printed from the rear end R2 of the receipt paper R for a predetermined length (about 1 m to 2 m) in the longitudinal direction (feed direction) of the receipt paper R.

When the cover 56 is open, the receipt paper R may be displaced. The predetermined length is longer than the displacement length of the receipt paper R in the feed direction.

Description will be made with reference to Fig. 3 again.

The main body 58 includes the near-end sensor 40, which is a detector device that detects a mark.

The near-end sensor 40 faces the feeding path 52.

The near-end sensor 40 faces the position (print position) of the mark R3 on the receipt paper R, which is fed by the feeding path 52.

The near-end sensor 40 is a reflective sensor including a light emitter and a light receiver (both of them are not shown).

The near-end sensor 40 outputs a voltage corresponding to the amount of light received by the light receiver.

When the receipt paper R on the feeding path 52 has an enough length, the white face of the receipt paper R on the feeding path 52 reflects light and the light receiver of the near-end sensor 40 receives the reflected light.

Then the near-end sensor 40 outputs a voltage corresponding to the amount of the light received by the light receiver, for example, the voltage of about 5 V.

In this way, the near-end sensor 40 detects the receipt paper R on the feeding path 52.

Further, when no receipt paper R is on the feeding path 52, the light receiver of the near-end sensor 40 receives almost no light emitted from the light emitter.

In this case, the near-end sensor 40 outputs the voltage of about 0 V, for example.

In this way, the near-end sensor 40 detects absence of the receipt paper R on the feeding path 52.

Further, when the short receipt paper R is on the feeding path 52, the black mark R3 of the receipt paper R reflects light and the light receiver of the near-end sensor 40 receives the reflected light.

The amount of the light, which is reflected by the black mark R3 and received by the light receiver, is about half of the amount of the light, which is reflected by the white face.

Therefore the near-end sensor 40 outputs the voltage of about 2.5 V, for example. In this manner, the near-end sensor 40 detects the mark R3 on the receipt paper R fed by the feeding path 52. In other words, the near-end sensor 40 detects that the receipt paper R on the feeding path 52 is at least shorter than the mark R3.

The cover 56 is rotatably coupled to the main body 58 via the hinge 57.

For example, a lock (not shown) locks the cover 56 on the main body 58. When the lock is unlocked, the cover 56 is rotated upward about the hinge 57 being the center and opens the main body 58.

Further, when the open cover 56 is rotated downward and locked, the cover 56 closes the main body 58.

The cover 56 includes the print device 38 and the cutter 59.

The print device 38 prints the information on the front side of the receipt paper R.

The print device 38 is, for example, a thermal head. Hereinafter, the print device 38 will be referred to as the thermal head 38.

When the cover 56 closes the main body 58, the thermal head 38 is in close contact with the platen 53. Further, when the cover 56 closes the main body 58, the cutter 54 is in close contact with the cutter 59. The receipt paper R is sandwiched between the thermal head 38 and the platen 53, and the information is printed on the receipt paper R while the receipt paper R is being fed. Note that the cover 56 is opened when refilling the accommodating device 51 of the printer 24 with the new receipt paper R, when removing the receipt paper R jammed in the main body 58, and the like.

When the cover 56 is open, the receipt paper R is slightly displaced in the feed direction because the receipt paper R is wound or because of other reasons.

The printer 24 rotates the platen 53 and thereby feeds the receipt paper R sandwiched between the thermal head 38 and the platen 53.

The printer 24 prints product information and payment information on the receipt paper R by using the thermal head 38. Further, the cutter motor 39 (see Fig. 6) drives the cutter 54 and the cutter 59. The printer 24 thereby cuts the receipt paper R on which the product information and the payment information are printed, and issues a receipt.

Hereinafter, the hardware configuration of the self POS terminal 1 and the hardware configuration of the printer 24 will be described.

Fig. 5 is a block diagram showing the hardware configuration of the self POS terminal 1.

In Fig. 5, the self POS terminal 1 includes the first controller device 100, the memory device 14, and the like.

The first controller device 100 includes the CPU (Central Processing Unit) 11, the ROM (Read Only Memory) 12, and the RAM (Random Access Memory) 13.

The CPU 11 is a main controller.

The ROM 12 stores various programs.

Various kinds of data are decompressed in the RAM 13.

The memory device 14 stores various programs.

The CPU 11, the ROM 12, the RAM 13, and the memory device 14 are connected to each other via the data bus 15.

The CPU 11 decompresses the various programs stored in the ROM 12 and the memory device 14 in the RAM 13. The first controller device 100 operates based on the control program, and thereby executes the control processing (described later).

The memory device 14 is a nonvolatile memory that stores information after power-off such as an HDD (Hard Disc Drive) or a flush memory.

The memory device 14 includes the control program partition 141 that stores the control program.

Further, the first controller device 100 is connected to the touchscreen 21, the display device 22, the reader device 23, the printer 24, the first weighing device 251, the second weighing device 261, the change dispenser 27, the card reader device 28, and the light emitting device 29 via the data bus 15 and the controller 16.

The touchscreen 21 includes the start key 211, the end key 212, and other keys corresponding to keys displayed on the display device 22.

A customer operates the start key 211 when the sales register operation of products is started.

The customer operates the end key 212 when the sales register operation of products is finished.

When customer operates the end key 212, the self POS terminal 1 starts the payment processing.

Further, the first controller device 100 is connected to the communication device 48 via the data bus 15. The communication device 48 is connected to the other self POS terminals 1 and the attendant PC 2 via the communication network NT.

The hardware configuration of the attendant PC 2 is not shown. The attendant PC 2 is a computer including a controller device, a memory device, a display device, and the like.

The controller device includes a CPU, a ROM, and a RAM.

In other words, the controller device of the attendant PC 2 executes the control processing (described later) based on the control program.

Fig. 6 is a block diagram showing the hardware configuration of the printer 24.

As shown in Fig. 6, the printer 24 includes the second controller device 300, the memory device 34 , and the like.

The second controller device 300 includes the CPU 31, the ROM 32, and the RAM 33.

The CPU 31 is a main controller.

The ROM 32 stores various programs.

Various kinds of data are decompressed in the RAM 33.

The memory device 34 stores various programs.

The CPU 31, the ROM 32, the RAM 33, and the memory device 34 are connected to each other via the data bus 35.

The CPU 31 decompresses the various programs stored in the ROM 32 and the memory device 34 in the RAM 33.

The second controller device 300 operates based on the control program decompressed in the RAM 33, and thereby executes the control processing (described later).

The memory device 34 is a nonvolatile memory that stores information after power-off such as an HDD or a flush memory. The memory device 34 includes the control program partition 341 that stores the control program.

Further, the second controller device 300 is connected to the platen motor 37, the thermal head 38, the cutter motor 39, the near-end sensor 40, and the cover open sensor 47 via the data bus 35 and the controller 36.

The cover open sensor 47 senses that the cover 56 opens the main body 58 and that the cover 56 closes the main body.

Further, the second controller device 300 is connected to the communication device 49 via the data bus 35. The communication device 49 is connected to the controller 16 via the communication network NT.

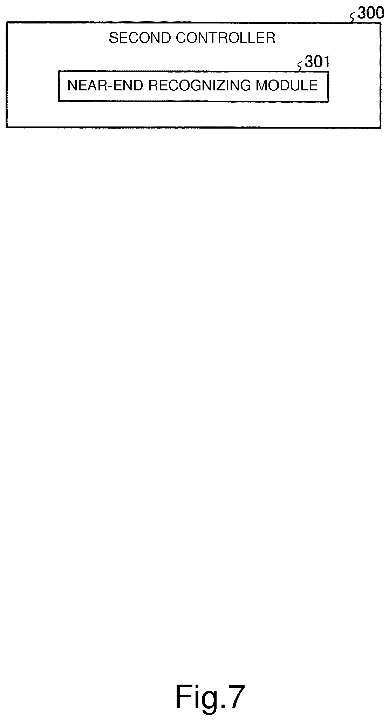

Hereinafter, with reference to Fig. 7 to Fig. 10, the control of the printer 24 and the self POS terminal 1 will be described in detail.

Fig. 7 is a functional block diagram showing the functional configuration of the printer 24.

The second controller device 300 functions as the near-end recognizing module 301 by executing control programs stored in the ROM 32 and the control program partition 341 of the memory device 34.

The near-end recognizing module 301 has a function of recognizing the near-end of the receipt paper R based on the result of detecting the mark R3 by the near-end sensor 40.

Specifically, the near-end recognizing module 301 determines that the near-end sensor 40 detects the mark R3 based on an output from the near-end sensor 40.

The near-end recognizing module 301 determines that the mark R3 is detected, and recognizes that the receipt paper R is in the near-end status.

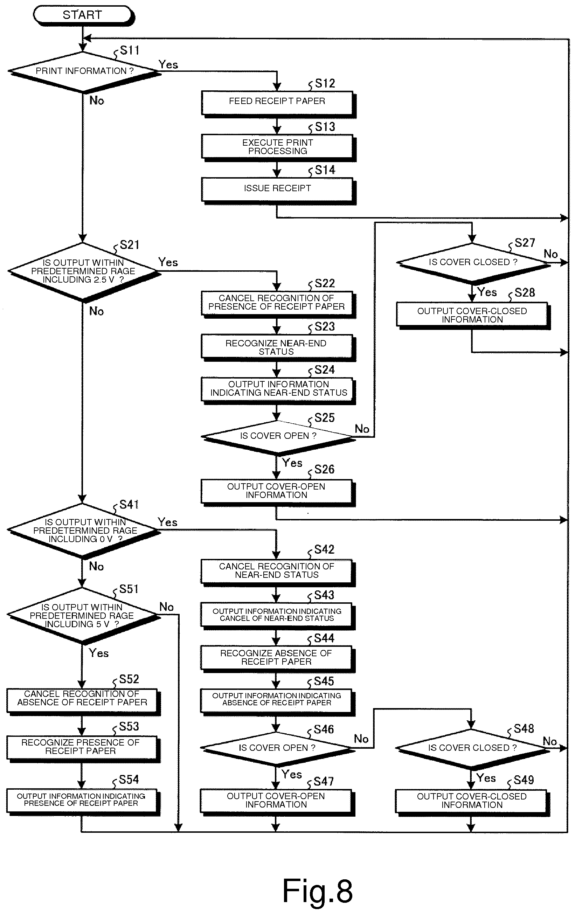

Fig. 8 is a flowchart showing the control processing of the printer 24.

Hereinafter, in the description of the control processing, the second controller device 300 recognizes presence of the receipt paper R.

As shown in Fig. 8, in Step S11, the second controller device 300 determines if print information is input from the self POS terminal 1 or not. The print information includes product information, payment information, and the like.

For example, the print information is input from the first controller device 100 of the self POS terminal 1 via the controller 16 and the communication device 49.

When it is determined that the print information is input (Step S11, Yes), the processing of the second controller device 300 proceeds to Step S12.

In Step S12, the second controller device 300 rotates the platen 53 to thereby feed the receipt paper R.

Then, in Step S13, the second controller device 300 prints the print information on the front side of the receipt paper R by using the thermal head 38.

After the end of the print processing, in Step S14, the second controller device 300 cuts the printed receipt paper R by using the cutter 54 and the cutter 59 in cooperation with each other, and dispenses the receipt from the dispenser slot 55. In other words, the second controller device 300 issues the receipt. Then, after the receipt is issued, the processing of the second controller device 300 returns to Step S11.

Further, when it is determined that print information is not input (Step S11, No), the processing of the second controller device 300 proceeds to Step S21.

In Step S21, the second controller device 300 determines if the output from the near-end sensor 40 is within a predetermined range (for example, 2 V to 3 V) including 2.5 V at the center or not.

When the mark R3 on the feeding path 52 passes the installation position of the near-end sensor 40, the near-end sensor 40 outputs 2.5 V, preferably.

However, when the mark R3 passes the near-end sensor 40, output from the near-end sensor 40 may be uneven around 2.5 V being the center affected by uneven print density of the mark R3 printed on the receipt paper R.

In view of this, in Step S21, the second controller device 300 determines if the output from the near-end sensor 40 is within a predetermined range including 2.5 V at the center or not.

When the output from the near-end sensor 40 is within a predetermined range including 2.5 V at the center, the second controller device 300 determines that the near-end sensor 40 detects the mark R3 on the feeding path 52.

When it is determined that the mark R3 is detected (Step S21, Yes), the processing of the second controller device 300 proceeds to Step S22.

In Step S22, the second controller device 300 cancels recognition of the receipt paper R.

Next, in Step S23, the second controller device 300 recognizes that the receipt paper R is in the near-end status.

Then, in Step S24, the second controller device 300 outputs information indicating that the receipt paper R is in the near-end status to the self POS terminal 1.

For example, the second controller device 300 outputs the information indicating that the receipt paper R is in the near-end status to the first controller device 100 of the self POS terminal 1 via the communication device 49 and the controller 16.

Next, in Step S25, the second controller device 300 determines if the cover 56 is open or not.

When the cover open sensor 47 detects that the cover 56 is open, the second controller device 300 determines that the cover 56 is open.

When it is determined that the cover 56 is open (Step S25, Yes), the processing of the second controller device 300 proceeds to Step S26.

In Step S26, the second controller device 300 outputs information indicating that the cover 56 is open to the self POS terminal 1. For example, the second controller device 300 outputs the information indicating that the cover 56 is open to the first controller device 100 of the self POS terminal 1 via the communication device 49 and the controller 16.

Then, after outputting the information indicating that the cover 56 is open, the processing of the second controller device 300 returns to Step S11.

Meanwhile, when it is determined that the cover 56 is not open (S25, No), the processing of the second controller device 300 proceeds to Step S27.

In Step S27, the second controller device 300 determines if the cover 56 is closed or not.

When the cover open sensor 47 detects that the cover 56 is closed, the second controller device 300 determines that the cover 56 is closed.

When it is determined that the cover 56 is closed (Step S27, Yes), the processing of the second controller device 300 proceeds to Step S28.

In Step S28, the second controller device 300 outputs the information indicating that the cover 56 is closed to the self POS terminal 1. For example, the second controller device 300 outputs the information indicating that the cover 56 is closed to the first controller device 100 of the self POS terminal 1 via the communication device 49 and the controller 16.

Then, after outputting the information indicating that the cover 56 is closed, the processing of the second controller device 300 returns to Step S11.

Therefore, even if the receipt paper R is slightly displaced when the cover 56 is opened and then closed without refilling the printer 24 with the receipt paper R, the near-end sensor 40 detects the mark R3 successively printed on the receipt paper R.

Therefore the second controller device 300 successively recognizes that the receipt paper R is in the near-end status.

Further, when it is determined that the output from the near-end sensor 40 is out of the predetermined range including 2.5 V at the center (Step S21, No), the processing of the second controller device 300 proceeds to Step S41.

In Step S41, the second controller device 300 determines if the output from the near-end sensor 40 is within a predetermined range (for example, 0 V to 0.5 V) including 0 V or not.

When the output from the near-end sensor 40 is within 0 V to 0.5 V, it means that the near-end sensor 40 detects absence of the receipt paper R.

When it is determined that the output from the near-end sensor 40 is within a predetermined range (for example, 0 V to 0.5 V) including 0 V (Step S41, Yes), the processing of the second controller device 300 proceeds to Step S42.

In Step S42, the second controller device 300 cancels recognition that the receipt paper R is in the near-end status.

Then, in Step S43, the second controller device 300 outputs information indicating cancel of the near-end status to the self POS terminal 1.

Next, in Step S44, the second controller device 300 recognizes absence of the receipt paper R on the feeding path 52.

Then, in Step S45, the second controller device 300 outputs information indicating absence of the receipt paper R to the self POS terminal 1.

For example, the second controller device 300 outputs the information indicating absence of the receipt paper R to the first controller device 100 of the self POS terminal 1 via the communication device 49 and the controller 16.

Next, in Step S46, the second controller device 300 determines if the cover 56 is open or not.

When the cover open sensor 47 detects that the cover 56 is open, the second controller device 300 determines that the cover 56 is open.

When it is determined that the cover 56 is open (Step S46, Yes), the processing of the second controller device 300 proceeds to Step S47.

In Step S47, the second controller device 300 outputs information indicating that the cover 56 is open to the self POS terminal 1. For example, the second controller device 300 outputs the information indicating that the cover 56 is open to the first controller device 100 of the self POS terminal 1 via the communication device 49 and the controller 16.

Then, after outputting the information indicating that the cover 56 is open, the processing of the second controller device 300 returns to Step S11.

Meanwhile, when it is determined that the cover 56 is not open (Step S46, No), the processing of the second controller device 300 proceeds to Step S48.

In Step S48, the second controller device 300 determines if the cover 56 is closed or not.

When the cover open sensor 47 detects that the cover 56 is closed, the second controller device 300 determines that the cover 56 is closed.

When it is determined that the cover 56 is closed (Step S48, Yes), the processing of the second controller device 300 proceeds to Step S49.

In Step S49, the second controller device 300 outputs information indicating that the cover 56 is closed to the self POS terminal 1.

For example, the second controller device 300 outputs the information indicating that the cover 56 is closed to the first controller device 100 of the self POS terminal 1 via the communication device 49 and the controller 16.

Then, after outputting the information indicating that the cover 56 is closed, the processing of the second controller device 300 returns to Step S11.

Next, when it is determined that the output from the near-end sensor 40 is out of the predetermined range (for example, 0 V to 0.5 V) including 0 V (Step S41, No), the processing of the second controller device 300 proceeds to Step S51.

In Step S51, the second controller device 300 determines if the output from the near-end sensor 40 is within a predetermined range (for example, 4.5 V to 5.5 V) including 5 V at the center or not.

When the output from the near-end sensor 40 is within 4.5 V to 5.5 V, it means that the near-end sensor 40 detects that the receipt paper R is on the feeding path 52.

When it is determined that the output from the near-end sensor 40 is within the predetermined range including 5 V at the center (Step S51, Yes), the processing of the second controller device 300 proceeds to Step S52.

In Step S52, the second controller device 300 cancels recognition of absence of the receipt paper R.

Then, in Step S53, the second controller device 300 recognizes presence of the receipt paper R.

Then, in Step S54, the second controller device 300 outputs information indicating presence of the receipt paper R to the self POS terminal 1.

For example, the second controller device 300 outputs the information indicating presence of the receipt paper R to the first controller device 100 of the self POS terminal 1 via the communication device 49 and the controller 16.

It means that the self POS terminal 1 is refilled with new receipt paper R after absence of the receipt paper R.

Then, after outputting the information indicating presence of the receipt paper R, the processing of the second controller device 300 returns to Step S11.

Note that, in Step S48, when it is determined that the cover 56 is not closed (Step S48, No), the processing of the second controller device 300 returns to Step S11.

Further, in Step S51, when it is determined that the output from the near-end sensor 40 is within the predetermined range including 5 V at the center (S51, No), the processing of the second controller device 300 returns to Step S11.

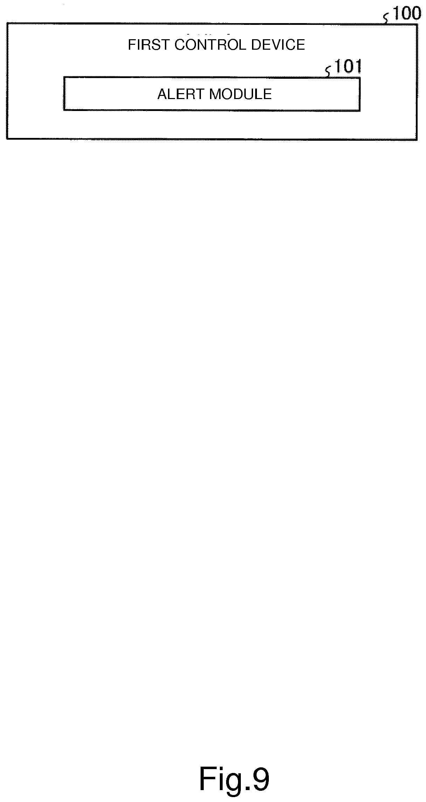

Fig. 9 is a functional block diagram showing the functional configuration of the self POS terminal 1.

The first controller device 100 functions as the alert module 101 by executing control programs stored in the ROM 12 and the control program partition 141 of the memory device 14.

The alert module 101 has a function of alerting recognition of the near-end status of the receipt paper R in the printer 24.

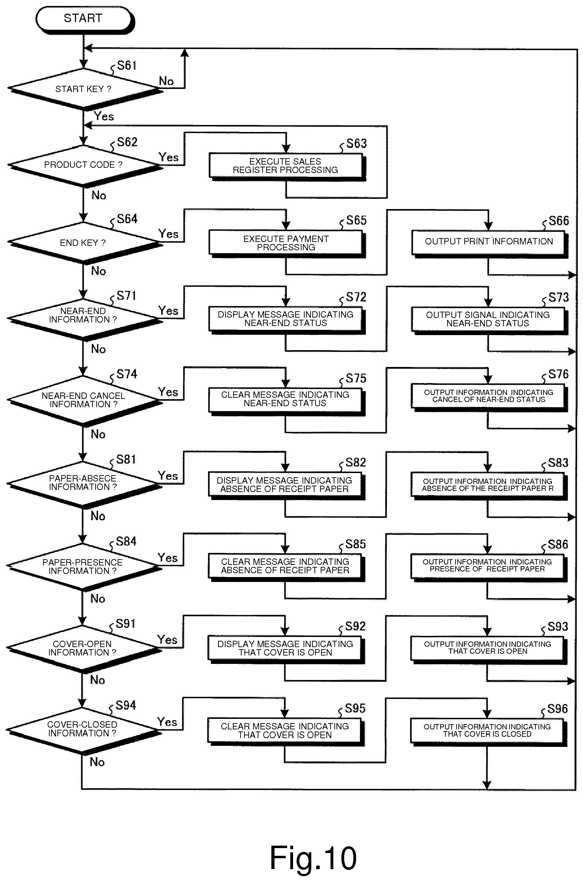

Fig. 10 is a flowchart showing the control processing of the self POS terminal 1.

First, in Step S61, the first controller device 100 of the self POS terminal 1 is in the standby status. The first controller device 100 determines if the start key 211 displayed on the display device 22 is operated or not.

The start key is operated by a customer when the operation of the self POS terminal 1 is started.

The first controller device 100 stands by until the start key is operated (Step S61, No).

When it is determined that the start key is operated (Step S61, Yes), the processing of the first controller device 100 proceeds to Step S62.

In Step S62, the first controller device 100 determines if a product code is obtained from the reader device 23 based on the sales register operation by the customer or not. The product code identifies a product.

When it is determined that a product code is obtained (Step S62, Yes), the processing of the first controller device 100 proceeds to Step S63.

In Step S63, the first controller device 100 reads the product information corresponding to the obtained product code from a product master (not shown), and executes the sales register processing stored in the product information partition 131. Then, after executing the sales register processing, the processing of the first controller device 100 returns to Step S62.

Further, when it is determined that no product code is obtained (Step S62, No), the processing of the first controller device 100 proceeds to Step S64.

In Step S64, the first controller device 100 determines if the end key 212 is operated or not. The end key 212 is used to finish the sales register processing.

The end key is operated by the customer when the sales register operation of the self POS terminal 1 is finished.

When it is determined that the end key is operated (Step S64, Yes), the processing of the first controller device 100 proceeds to Step S65.

In Step S65, the first controller device 100 executes the payment processing based on the product information stored in the product information partition 131.

Then, in Step S66, the first controller device 100 outputs print information based on the product information and the payment information to the printer 24. In other words, the first controller device 100 outputs the print information to the second controller device 300 of the printer 24 via the controller 16 and the communication device 49 of the printer 24.

Then, after the printer 24 outputs the print information, the processing of the first controller device 100 returns to Step S61.

Further, when it is determined that the end key 212 is not operated (Step S64, No), the processing of the first controller device 100 proceeds to Step S71.

In Step S71, the first controller device 100 determines if information indicating that the receipt paper R is in the near-end status is input or not from the printer 24, for example.

For example, the information indicating that the receipt paper R is in the near-end status is input from the second controller device 300 of the printer 24 to the first controller device 100 via the communication device 49 and the controller 16.

When it is determined that the information indicating that the receipt paper R is in the near-end status is input (Step S71, Yes), the processing of the first controller device 100 proceeds to Step S72.

In Step S72, the first controller device 100 displays a message indicating that the receipt paper R in the printer 24 is in the near-end status on the display device 22.

Then, in Step S73, the first controller device 100 outputs a signal indicating that the receipt paper R in the printer 24 is in the near-end status.

Specifically, the first controller device 100 controls the light emitting device 29, i.e., an alert device, to perform an alert operation. In other words, the first controller device 100 controls the light emitting device 29 to turn on a red light with/without blinking.

Further, the first controller device 100 sends the information indicating near-end to the attendant PC 2.

The attendant PC 2 receives the information, and then displays a message indicating that the receipt paper R in the printer 24 is in the near-end status on the display device.

Then, after outputting the signal indicating that the receipt paper R is in the near-end status, the processing of the first controller device 100 returns to Step S61.

Further, when it is determined that the information indicating that the receipt paper R is in the near-end status is not input (Step S71, No), the processing of the first controller device 100 proceeds to Step S74.

In Step S74, the first controller device 100 determines if information indicating cancel of the near-end status of the receipt paper R is input from the printer 24 or not.

For example, the information indicating cancel of the near-end status of the receipt paper R is input from the second controller device 300 of the printer 24 to the first controller device 100 via the communication device 49 and the controller 16.

When it is determined that the information indicating cancel of the near-end status of the receipt paper R is input (Step S74, Yes), the processing of the first controller device 100 proceeds to Step S75.

In Step S75, the first controller device 100 clears a message indicating that the receipt paper R in the printer 24 is in the near-end status displayed on the display device 22.

Further, the first controller device 100 controls the light emitting device 29 to turn off the light.

Then, in Step S76, the first controller device 100 sends the information indicating cancel of the near-end status of the receipt paper R in the printer 24 to the attendant PC 2.

The attendant PC 2 receives the information, and then clears the displayed message indicating the near-end of the receipt paper R in the printer 24.

Then, after sending the information indicating cancel of the near-end status of the receipt paper R to the attendant PC 2, the processing of the first controller device 100 returns to Step S61.

Further, when it is determined that the information indicating cancel of the near-end status of the receipt paper R is not input (Step S74, No), the processing of the first controller device 100 proceeds to Step S81.

In Step S81, the first controller device 100 determines if information indicating absence of the receipt paper R is input from the printer 24 or not.

For example, the information indicating absence of the receipt paper R is input from the second controller device 300 of the printer 24 to the first controller device 100 via the communication device 49 and the controller 16.

When it is determined that the information indicating absence of the receipt paper R is input (Step S81, Yes), the first controller device 100 proceeds to Step S82.

In Step S82, the first controller device 100 displays a message indicating absence of the receipt paper R in the printer 24 on the display device 22.

Then, in Step S83, the first controller device 100 outputs the information indicating absence of the receipt paper R in the printer 24.

Specifically, the first controller device 100 controls the light emitting device 29, i.e., an alert device, to perform an alert operation. In other words, the first controller device 100 controls the light emitting device 29 to turn on a red light with/without blinking.

Further, the first controller device 100 sends the information indicating absence of the receipt paper R to the attendant PC 2.

The attendant PC 2 receives the information, and then displays a message indicating absence of the receipt paper R in the printer 24 on the display device.

Then, after sending the information indicating absence of the receipt paper R to the attendant PC 2, the processing of the first controller device 100 returns to Step S61.

Further, when it is determined that the information indicating absence of the receipt paper R is not input (S81, No), the processing of the first controller device 100 proceeds to Step S84.

In Step S84, the first controller device 100 determines if the information indicating presence of the receipt paper R is input from the printer 24 or not.

For example, the information indicating presence of the receipt paper R is input from the second controller device 300 of the printer 24 to the first controller device 100 via the communication device 49 and the controller 16.

When it is determined that the information indicating presence of the receipt paper R is input (Step S84, Yes), the processing of the first controller device 100 proceeds to Step S85.

In Step S85, the first controller device 100 clears a message indicating absence of the receipt paper R in the printer 24 displayed on the display device 22.

Further, the first controller device 100 controls the light emitting device 29 to turn off the light.

Then, in Step S86, the first controller device 100 sends the information indicating presence of the receipt paper R in the printer 24 to the attendant PC 2.

The attendant PC 2 receives the information, and then clears the displayed message indicating absence of the receipt paper R in the printer 24.

Then, after sending the information indicating presence of the receipt paper R to the attendant PC 2, the processing of the first controller device 100 returns to Step S61.

Further, when it is determined that the information indicating presence of the receipt paper R is not input (Step S84, No), the processing of the first controller device 100 proceeds to Step S91.

In Step S91, the first controller device 100 determines if information indicating that the cover 56 is open is input from the printer 24 or not.

For example, the information indicating that the cover 56 is open is input from the second controller device 300 of the printer 24 to the first controller device 100 via the communication device 49 and the controller 16.

When it is determined that the information indicating that the cover 56 is open is input (Step S91, Yes), the processing of the first controller device 100 proceeds to Step S92.

In Step S92, the first controller device 100 displays a message indicating that the cover 56 of the printer 24 is open on the display device 22.

Then, in Step S93, the first controller device 100 outputs the information indicating that the cover 56 of the printer 24 is open to the attendant PC 2.

The attendant PC 2 receives the information, and then displays a message indicating that the cover 56 of the printer 24 is open on the display device.

Then, after outputting the information indicating that the cover 56 is open to the attendant PC 2, the processing of the first controller device 100 returns to Step S61.

Further, when it is determined that the information indicating that the cover 56 is open is not input (Step S91, No), the processing of the first controller device 100 proceeds to Step S94.

In Step S94, the first controller device 100 determines if the information indicating that the cover 56 of the printer 24 is closed is input or not.

For example, the information indicating that the cover 56 is closed is input from the second controller device 300 of the printer 24 to the first controller device 100 via the communication device 49 and the controller 16.

When it is determined that the information indicating that the cover 56 of the printer 24 is input (Step S94, Yes), the processing of the first controller device 100 proceeds to Step S95.

In Step S95, the first controller device 100 clears a message indicating that the cover 56 of the printer 24 is open displayed on the display device 22.

Then, in Step S96, the first controller device 100 sends the information indicating that the cover 56 of the printer 24 is closed to the attendant PC 2.

The attendant PC 2 receives the information, and then clears the displayed message indicating that the cover 56 of the printer 24 is open.

Then, after sending the information indicating that the cover 56 is closed to the attendant PC 2, the processing of the first controller device 100 returns to Step S61.

Note that, when it is determined that the information indicating that the cover 56 of the printer 24 is closed is not input (Step S94, No), the processing of the first controller device 100 returns to Step S61.

As described above, according to the printer 24 of the embodiment, the second controller device 300 detects the bar-shape black mark R3 successively printed on the rear end R2 of the receipt paper R, and recognizes that the receipt paper R is in the near-end status.

Therefore, for example, even if the receipt paper R is displaced in the feed direction when the cover 56 is opened after it is recognized that the receipt paper R is in the near-end status, the second controller device 300 detects the mark R3 again after the cover 56 is closed and recognizes that the receipt paper R is in the near-end status.

Therefore the second controller device 300 still recognizes that the receipt paper R (recording medium) is in the near-end status, which was recognized once.

Further, according to the printer 24 of the embodiment, once the second controller device 300 recognizes that the receipt paper R is in the near-end status, the second controller device 300 keeps on recognizing that the receipt paper R is in the near-end status until the second controller device 300 recognizes that the printer 24 is refilled with new receipt paper R or recognizes absence of the receipt paper R.

Therefore, for example, even if output from the near-end sensor 40 slightly varies within a predetermined range (for example, within range of 1 V) including 2.5 V because of uneven print density of the mark R3, the printer 24 keeps on recognizing that the receipt paper R is in the near-end status.

Further, according to the receipt paper R of the embodiment, the bar-shape mark R3 having a predetermined length is successively printed from the rear end R2 of the receipt paper R. Therefore, for example, even if the cover 56 of the printer 24 is opened/closed, the printer 24 keeps on recognizing that the receipt paper R is in the near-end status.

Further, according to the embodiment, the second controller device 300 of the printer 24 built in the self POS terminal 1 detects the bar-shape mark R3 successively printed from the rear end R2 of the receipt paper R and recognizes that the receipt paper R is in the near-end status.

Therefore, for example, even if the receipt paper R is displaced in the feed direction when the cover 56 is opened/closed after it is recognized that the receipt paper R is in the near-end status, the second controller device 300 still recognizes that the recording medium is in the near-end status, which was recognized once.

Therefore, the first controller device 100 keeps on alerting that the receipt paper R is in the near-end status.

Further, according to the embodiment, the near-end sensor 40 detects that the receipt paper R is in the near-end status and detects absence of the receipt paper R. Therefore it is not necessary to provide dedicated sensors for detecting them.

In the above-mentioned embodiment, the printer 24 built in the self POS terminal 1 is used. Alternatively, an external printer electrically connected to the self POS terminal 1 may be used.

Further, according to the embodiment, a self POS terminal is used as a sales data processing apparatus.

However, alternatively, the sales data processing apparatus may be a semi-self payment apparatus including a register apparatus and a payment apparatus, where a store worker makes the sales register operation with the register apparatus and a customer by himself makes the payment operation.

Alternatively, the sales data processing apparatus may be a POS terminal where a store worker makes the sales register operation and the payment operation.

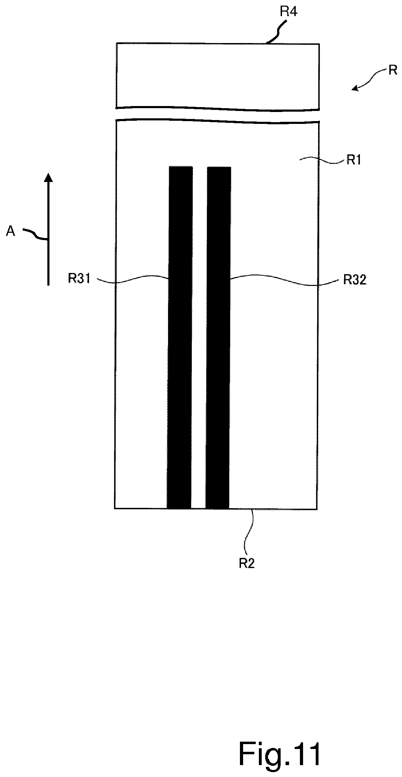

Further, as shown in Fig. 4, the one mark R3 is printed on the back side R1 of the receipt paper R of the embodiment. However, alternatively, as shown in Fig. 11, the two parallel marks R31 and R32 may be printed on the receipt paper R, for example.

The near-end sensor 40 may be installed at a different position depending on the kind of the printer 24, for example, the model of the printer 24.

As shown in Fig. 11, the marks R31 and R32 are printed at different positions on the receipt paper R corresponding to the positions of the near-end sensors 40 of the two printers 24 of different kind, the positions of the near-end sensors 40 of the two printers 24 being different from each other.

Therefore, the one kind of receipt paper R supports the printers 24 of two kinds.

Note that the number of the printed marks R3 may be not only two but also any.

Further, according to the embodiment, the black mark R3 is printed on the receipt paper R. Alternatively, a mark capable of emitting infrared rays or ultraviolet rays may be printed.

In this case, an infrared sensor or an ultraviolet sensor detects the mark R3.

Further, according to the embodiment, the recording medium is rolled receipt paper. Alternatively, the recording medium may be fan-fold paper, ticket paper, label paper, or the like.

Further, according to the embodiment, a product (commercial product) is described as an example of a product-for-sale. Alternatively, the product-for-sale may be a service or another configuration like a service, for example.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A printer system, comprising:
a print device that prints information on an elongated recording medium;
a feeding path that feeds the recording medium to the print device;
a detector device for the feeding path that detects a mark on the recording medium, the mark being successively formed from a rear end of the recording medium in a feed direction of the feeding path, the mark having a predetermined length in a longitudinal direction of the recording medium; and
a controller device that recognizes that the recording medium is shortened in the longitudinal direction when the detector device detects the mark.

2. The printer system according to claim 1, wherein
the predetermined length is larger than a displacement length, the recording medium being likely to be displaced in the feed direction.

3. The printer system according to claim 1 or 2, wherein
the mark has a bar-shape in the longitudinal direction of the recording medium.

4. The printer system according to any one of claims 1 to 3, wherein
the mark formed on the recording medium has a plurality of marks.

5. The printer system according to any one of claims 1 to 4, wherein
when the detector device detects the mark, the controller device recognizes that the length of the recording medium in the longitudinal direction is equal to or smaller than the predetermined length.

6. The printer system according to any one of claims 1 to 5, wherein
when the detector device detects the mark, the controller device keeps on recognizing that the recording medium is shortened in the longitudinal direction until the detector device detects absence of the recording medium.

7. The printer system according to any one of claims 1 to 6, wherein
the detector device further detects presence/absence of the recording medium.

8. An elongated recording medium to be supplied to a printer system including a print device that prints information on the elongated recording medium, a feeding path that feeds the recording medium to the print device, and a detector device that detects that the recording medium is shortened in a longitudinal direction, the elongated recording medium comprising:
a front end in a feed direction of the feeding path;
a rear end in the feed direction of the feeding path; and
a mark successively formed from the rear end in the feed direction toward the front end in the feed direction, the mark having a predetermined length in the longitudinal direction of the recording medium, the mark being to be detected by the detector device.

9. The elongated recording medium according to claim 8, wherein
the predetermined length is larger than a displacement length, the recording medium being likely to be displaced in the feed direction.

10. The elongated recording medium according to claim 8 or 9, wherein
the mark has a bar-shape in the longitudinal direction of the recording medium.

11. The elongated recording medium according to any one of claims 8 to 10, wherein
the mark formed on the recording medium has a plurality of marks.

12. A sales data processing apparatus, comprising:
an input device that inputs identification information identifying a product-for-sale;
a printer that
prints print information on an elongated recording medium, the print information including information on the product-for-sale, the product-for-sale corresponding to the identification information input by the input device, and
issues a receipt;
an alert device that alerts that the recording medium of the printer is shortened; and
a first controller device that
stores the information on the product-for-sale corresponding to the identification information input by the input device to execute sales register processing for the product-for-sale,
outputs the stored information on the product-for-sale to the printer to issue the receipt, and
controls the alert device to execute the alert operation when the printer inputs information indicating that the recording medium is shortened,
the printer including
a print device that prints the print information on the elongated recording medium,
a feeding path that feeds the elongated recording medium to the print device,
a detector device for the feeding path that detects a mark on the recording medium, the mark being successively formed from a rear end of the recording medium in a feed direction of the feeding path, the mark having a predetermined length in a longitudinal direction of the recording medium, and
a second controller device that outputs, when the detector device detects the mark, the information indicating that the elongated recording medium is shortened in the longitudinal direction to the first control device for the alert operation by the alert device.

13. The sales data processing apparatus according to claim 12, wherein
the predetermined length is larger than a displacement length, the recording medium being likely to be displaced in the feed direction.

14. The sales data processing apparatus according to Claim 12 or 13, wherein
when the detector device detects the mark, the second controller device recognizes that the length of the recording medium in the longitudinal direction is equal to or smaller than the predetermined length.

15. A sales data processing system, comprising:
an input device that inputs identification information identifying a product-for-sale;
a printer that
prints print information on an elongated recording medium, the print information including information on the product-for-sale, the product-for-sale corresponding to the identification information input by the input device, and
issues a receipt;
an alert device that alerts that the recording medium of the printer is shortened; and
a first controller device that
stores the information on the product-for-sale corresponding to the identification information input by the input device to execute sales register processing for the product-for-sale,
outputs the stored information on the product-for-sale to the printer to issue the receipt, and
controls the alert device to execute the alert operation when the printer inputs information indicating that the recording medium is shortened,
the printer including
a print device that prints the print information on the elongated recording medium,
a feeding path that feeds the elongated recording medium to the print device,
a detector device for the feeding path that detects a mark on the recording medium, the mark being successively formed from a rear end of the recording medium in a feed direction of the feeding path, the mark having a predetermined length in a longitudinal direction of the recording medium, and
a second controller device that outputs, when the detector device detects the mark, the information indicating that the elongated recording medium is shortened in the longitudinal direction to the first control device for the alert operation by the alert device.
